# FASCICULE DE BREVET EUROPEEN

(11) **EP 3 210 824 B1**
(45) Date de publication et mention de la délivrance du brevet: **28.11.2018**
(21) Numéro de dépôt: 17154210.3
(22) Date de dépôt: 01.02.2017
(51) Int. Cl.: B60P 7/08, B64C 1/20, B60N 2/015, B64D 11/06

(54) **DISPOSITIF DE FIXATION D'UNE CHARGE A UN PLANCHER ET VEHICULE**
VORRICHTUNG ZUR BEFESTIGUNG EINER LAST AN EINEM BODEN, UND FAHRZEUG
DEVICE FOR SECURING A LOAD TO A FLOOR AND VEHICLE

(30) Priorité: 26.02.2016 FR 1600324
(43) Date de publication de la demande: 30.08.2017
(73) Titulaire: Airbus Helicopters, 13725 Marignane Cedex (FR)
(72) Inventeur: DALBES, Vincent, 13880 VELAUX (FR); CORNU, Jean-Charles, 13003 MARSEILLE (FR); JOSE, David, 13580 LA FARE LES OLIVIERS (FR)
(74) Mandataire: GPI & Associés

(56) Documents cités:
- EP-A1- 0 685 380
- WO-A1-2007/131761
- DE-U1- 9 206 036

## Description

La présente invention concerne un dispositif de fixation d'une charge à un plancher d'un véhicule.

L'invention se situe notamment dans le domaine technique des dispositifs de fixation d'une charge à un plancher, et plus particulièrement aux dispositifs de fixation d'un siège à un plancher d'aéronef.

Le terme « charge » désigne cependant tout élément susceptible d'être attaché à une structure de manière amovible. Par exemple, la charge peut être du fret, un mur médicalisé, une baie électronique,...

En effet, un siège peut être attaché à un plancher d'un aéronef par l'intermédiaire de dispositifs de fixation coopérant avec deux rails parallèles entre eux. Par exemple, le siège comporte deux pieds. Chaque pied comprend alors au moins un dispositif de fixation coulissant dans un rail s'étendant selon la longueur de l'aéronef.

Par exemple, les rails utilisés dans le domaine aéronautique peuvent avoir des sections en forme de C. Un tel rail est muni d'une paroi de fond inférieure ainsi que de deux parois latérales prolongées par des ailettes parallèles au fond pour définir une glissière. Les ailettes constituent conjointement une paroi supérieure du rail comprenant une succession d'encoches élargies de forme généralement cylindrique et d'encoches rétrécies de forme généralement parallélépipédique.

Pour attacher une charge à un rail, un dispositif de fixation connu est muni de patins cylindriques pouvant être insérés dans les encoches élargies du rail pour atteindre la glissière. Les patins sont déplaçables dans la glissière pour être mis en coïncidence avec les encoches rétrécies. Dès lors, le dispositif de fixation est retenu au rail selon l'axe en élévation du rail par interférence de forme entre le patin et les ailettes délimitant les encoches rétrécies.

Le document US 5823724 présente un rail de ce type.

Un aéronef peut selon cette technologie comprendre des rails qui s'étendent selon une direction d'extension. Les rails sont noyés dans le plancher ou fixé sur le plancher. En agençant les sièges sur des rails de ce type, un opérateur peut déplacer les sièges selon la direction d'extension les uns par rapport aux autres pour par exemple augmenter une distance séparant deux sièges selon cette direction d'extension. Un opérateur peut aussi enlever un siège si besoin pour libérer de l'espace dans la cabine.

Par ailleurs, un aéronef est susceptible d'accueillir des sièges présentant des empattements différents entre ces pieds. En particulier, des sièges réservés à des passagers de première classe peuvent présenter un empattement supérieur à des sièges destinés à des passagers d'une autre classe dite « deuxième classe » par exemple.

Dès lors, un aéronef comprenant une paire de rails destinés à accueillir des sièges présentant un empattement donné ne peut pas accueillir des sièges présentant un empattement différent sans modification de son plancher.

Un constructeur pourrait envisager d'agencer plusieurs paires de rails pour accueillir différents types de sièges. Par exemple, un plancher peut comprendre deux paires de rails pour pouvoir accueillir des sièges de première classe et de deuxième classe. Ainsi, deux rails gauches sont accolés du côté d'une rangée de sièges, et deux autres rails droits sont accolés d'un autre côté de la rangée de sièges.

Bien qu'intéressante, une telle solution peut être difficile à mettre en oeuvre sur un aéronef. En effet, un plancher muni de deux rangées de rails proches l'une de l'autre est fragilisé en termes de résistance mécanique, voire en termes de conception. Par suite, le plancher risque de ne pas respecter les exigences de tenue au crash des règlements de certification à respecter ainsi que la configuration cabine exigée.

Pour respecter de telles exigences, le plancher peut être épaissi. Toutefois, le plancher serait lourd et onéreux.

Le document US 8.360.385 présente un dispositif de fixation muni d'un réceptacle et d'une plaque. Cette plaque est circulaire et présente une ouverture en croix pour accueillir un crochet d'arrimage. La plaque dispose de pattes qui interférent avec des logements du réceptacle qui l'empêche de tourner autour d'un axe perpendiculaire à la plaque.

Ce document ne fournit pas un enseignement relatif à l'agencement de sièges présentant des empattements différents.

Le document FR 2.728.860 décrit un plancher de véhicule automobile visant à offrir une transformation de l'agencement de sièges.

Pour un siège, le plancher comporte deux rails dit « principaux » par commodité, et deux rails dit « secondaires » par commodité qui s'étendent selon une première direction. Chaque rail principal est relié à un rail secondaire par un rail s'étendant selon une deuxième direction sensiblement perpendiculaire à la première direction.

L'écartement entre les rails principaux est égal à l'écartement entre les rails secondaires.

Ce document ne fournit pas un enseignement relatif à l'agencement de sièges présentant des empattements différents.

Le document EP 1.544.105 décrit un rail pour fixer des sièges dans des avions de ligne. Le rail comporte une zone profilée et une zone porteuse comprenant des alliages différents.

Les documents DE 92 06 036, EP 0 685 380 et WO 2007/131761 sont aussi connus.

La présente invention concerne alors un dispositif de fixation visant à permettre l'agencement de deux sièges différents sans modifier un plancher.

Ainsi, l'invention concerne un dispositif de fixation pour fixer une charge à un plancher, ce dispositif de fixation comprenant un réceptacle destiné à être solidarisé au plancher, le réceptacle délimitant un volume d'insertion.

Le dispositif de fixation comprend un insert amovible agencé dans le volume d'insertion, l'insert s'étendant longitudinalement le long d'un axe longitudinal et transversalement le long d'un axe transversal, l'insert comprenant au moins un rail destiné à retenir un moyen de retenue de ladite charge, chaque rail pouvant déboucher sur un milieu extérieur destiné à être à l'extérieur du plancher, au moins un rail voire chaque rail s'étendant selon sa longueur le long d'un axe d'extension qui n'est ni confondu avec l'axe longitudinal ni confondu avec l'axe transversal.

L'expression « axe longitudinal » désigne un axe médian de l'insert et du réceptacle situé à égale distance transversalement d'un point extrêmal gauche et d'un point extrêmal droit de l'insert voire du réceptacle.

L'axe longitudinal peut être un axe de symétrie des corps concernés.

De même, l'expression « axe transversal » désigne un axe médian de l'insert et du réceptacle situé à égale distance longitudinalement d'un point extrêmal avant et d'un point extrêmal arrière de l'insert voire du réceptacle.

L'expression « axe d'extension » désigne un axe médian d'un rail situé à égale distance longitudinalement d'un point extrêmal gauche et d'un point extrêmal droit du rail. L'axe d'extension peut être un axe de symétrie du rail.

L'expression « délimitant un volume d'insertion » signifie que le volume d'insertion est au moins partiellement délimité par le réceptacle. Par exemple, le réceptacle comporte au moins un bord qui délimite le volume d'insertion dans des plans parallèles à l'axe longitudinal et à l'axe transversal. De manière complémentaire, le réceptacle comporte un fond qui délimite le volume d'insertion en élévation vers le bas. Au moins un fond ou un bord peut comporter des entailles pour faciliter l'ancrage du réceptacle au sein d'un plancher.

L'expression « rail » désigne un profil creux muni d'une ouverture ou un profil saillant le long duquel peut coulisser un moyen de retenue solidaire d'une charge.

Dès lors, le dispositif de fixation possède un réceptacle placé dans un plancher. La résistance du plancher est donc dimensionnée en fonction de ce réceptacle.

De plus le réceptacle reçoit un insert amovible muni d'au moins un rail. Ce rail peut s'étendre le long de son axe d'extension sur une longueur réduite, suffisante pour accueillir un siège par exemple.

Au moins un rail n'est pas placé strictement ni sur l'axe longitudinal ni sur l'axe transversal. Dès lors, un même insert peut positionner un rail à diverses positions pour permettre l'agencement de divers types de sièges par exemple.

En effet, un insert peut comporter deux rails parallèles entre eux. Cette solution n'est pas gênante puisque le plancher est dimensionné en fonction du réceptacle agencé à demeure dans le plancher.

Un insert peut aussi comporter un unique rail. Pour proposer diverses positions du rail, l'insert peut être sorti du réceptacle puis positionné différemment dans ce réceptacle. Par exemple, l'insert a une forme sensiblement parallélépipédique qui peut être pivotée à 180 degrés autour un axe en élévation perpendiculaire à la surface de l'insert, voire autour de l'axe longitudinal ou de l'axe transversale.

En outre, un même réceptacle peut accueillir différents inserts, chaque insert présentant un rail positionné à une distance transversale particulière de l'axe longitudinal de cet insert et du réceptacle correspondant.

Ainsi, un unique réceptacle positionné dans un plancher peut permettre d'agencer un insert permettant de positionner un rail à de multiples positions. L'invention permet alors de fixer diverses charges à un plancher sans devoir modifier structurellement le plancher, telles que différents fauteuils, meubles, civières. En effet, seul l'insert est éventuellement pivoté, voire changé.
En outre, le rail peut présenter un profil par exemple creux, et peut ainsi offrir des réglages aisés sans demander une multiplicité de réceptacles ou de configurations de plancher.
Le dispositif de fixation peut de plus comporter une ou plusieurs des caractéristiques qui suivent.
Ainsi, l'axe d'extension peut être parallèle à l'axe longitudinal et décalé transversalement par rapport à cet axe longitudinal.
De manière alternative, l'axe d'extension peut être parallèle à l'axe transversal et décalé longitudinalement par rapport à cet axe transversal.
Selon une autre réalisation, l'axe d'extension peut présenter un angle non nul et différent de 90 degrés avec l'axe longitudinal et l'axe transversal.
En outre, l'insert peut s'étendre transversalement selon sa largeur d'un premier flanc transversal vers un deuxième flanc transversal, parallèles entre eux, cet insert s'étendant longitudinalement selon sa longueur d'un premier flanc longitudinal vers un deuxième flanc longitudinal, parallèles entre eux.
L'insert a alors une forme parallélépipédique pouvant être pivotée à 90 degrés si l'insert a une forme généralement carré et/ou à 180 degrés pour positionner un rail de part et d'autre de l'axe longitudinal du réceptacle.
Par ailleurs, le dispositif de fixation comporte un système de vissage réversible pour visser l'insert au réceptacle.
Un tel système de vissage présente l'avantage de fixer de manière temporaire un insert à un réceptacle. L'insert peut donc être changé ou tourné par rapport au réceptacle sans intervention sur le plancher.

Dès lors, le dispositif de fixation et en particulier le système de vissage comporte au moins deux ensembles de vissage munis chacun d'une vis et d'un écrou, l'insert comprenant un orifice par ensemble de vissage, la vis ou l'écrou d'un ensemble de vissage glissant dans une glissière du réceptacle pour être agencé dans le réceptacle ou être retiré hors du réceptacle, chaque vis s'étendant en élévation pour traverser un des orifices de l'insert et être vissée à un écrou.

Par exemple, chaque vis comprenant une tête glissant dans une glissière du réceptacle pour être agencée dans le réceptacle ou être retirée hors du réceptacle, l'insert étant coincé en élévation entre le réceptacle et l'écrou.

Chaque vis peut être solidarisée au réceptacle en étant glissée dans une glissière du réceptacle. La vis est alors bloquée en élévation par cette glissière. L'insert est ensuite enfilé sur les vis puis solidarisé au réceptacle à l'aide des écrous.

Selon une autre variante, chaque écrou est agencé dans une glissière du réceptacle pour être agencée dans le réceptacle ou être retirée hors du réceptacle. Les écrous sont alors bloqués en élévation par cette glissière. L'insert est alors positionné dans le réceptacle. Dès lors, les vis traversent les orifices de l'insert pour être chacune vissées à un écrou.

L'installation de l'insert est donc aisée.

De plus, si les filets d'une vis sont endommagés, un opérateur peut retirer l'insert puis la vis endommagée pour remplacer cette vis endommagée sans intervenir sur le plancher en tant que tel.

Au moins un écrou peut aussi être noyé dans le réceptacle.

Par ailleurs et selon une première variante du système de vissage, chaque écrou peut être contenu dans un des orifices pour ne pas saillir en dehors de l'insert.

Les orifices de l'insert peuvent être usinés pour permettre l'insertion de l'écrou dans cet orifice. Par suite, le dispositif de fixation peut ne comporter aucune pièce saillant en élévation en dehors de l'épaisseur du plancher.

En outre, chaque vis peut comporter au moins un méplat coopérant par interférence de forme avec le réceptacle pour interdire une rotation de la vis sur elle-même par rapport au réceptacle lors du vissage d'un écrou à cette vis.

Les méplats sont favorablement ménagés sur la tête de la vis coulissant dans la glissière.

Chaque vis peut comporter au moins un méplat glissant le long d'une bordure d'une glissière par exemple, voire deux méplats glissant le long de deux bordures parallèles entre elles. L'interférence de forme entre les méplats et la glissière permet d'interdire la rotation de la vis autour de son axe de symétrie lors du vissage d'un écrou.

Selon une deuxième variante, chaque vis est munie d'une tête contenue dans un dit orifice pour ne pas saillir en dehors de l'insert, chaque écrou étant glissé dans une glissière et comportant au moins un méplat coopérant par interférence de forme avec le réceptacle pour interdire une rotation de l'écrou sur lui-même par rapport au réceptacle lors du vissage d'une vis à un écrou.

Par ailleurs, au moins une glissière peut s'étendre selon une bissectrice d'un coin du réceptacle.

Le fond du réceptacle comporte par exemple quatre coins présentant chacun une glissière à 45 degrés pour introduire les vis ou les écrous du système de vissage.

D'autres inclinaisons sont toutefois possibles, une glissière pouvant s'étendre par exemple parallèlement à un bord du réceptacle.

Par exemple, le dispositif de fixation comporte alors quatre vis disposées aux quatre coins d'un parallélogramme.

Le dispositif de fixation peut par ailleurs comporter une mousse agencée entre un fond de l'insert et un fond du réceptacle.

Une telle mousse peut permettre de remplir un espace vide séparant le réceptacle et l'insert pour éviter un phénomène de corrosion par condensation.

Eventuellement, la mousse peut permettre d'exercer un effort sur les vis ou les écrous pour positionner de manière adéquate ces organes dans le réceptacle. La mousse représente alors un moyen d'écartement élastique des têtes de vis ou des écrous.

Selon un autre aspect, un insert peut comporter un unique rail ou plusieurs rails.

Dans cette hypothèse, l'insert peut éventuellement comporter deux rails décalés en élévation l'un par rapport à l'autre.

En outre, au moins un rail peut comporter une plaque munie d'une ouverture débouchant sur ledit milieu l'extérieur, ladite ouverture s'étendant longitudinalement le long de l'axe d'extension du rail, l'ouverture comprenant une succession d'encoches élargies et d'encoches rétrécies, chaque encoche élargie présentant transversalement une largeur supérieure à une largeur d'une encoche rétrécie.

Par exemple, le moyen de retenue est alors un moyen usuel à patin. De manière illustrative et non exclusive, le moyen de retenue peut être du type décrit dans le brevet FR 2 971 976.

Par ailleurs, ledit axe longitudinal peut être un axe de symétrie dudit insert, voire du réceptacle.

Outre un dispositif de fixation, l'invention vise un véhicule muni d'un plancher comprenant ce dispositif de fixation pour fixer une charge à ce plancher,

Le réceptacle peut être noyé dans une épaisseur du plancher entre une peau inférieure et une peau supérieure de ce plancher, l'insert affleurant la peau supérieure.

L'invention et ses avantages apparaîtront avec plus de détails dans le cadre de la description qui suit avec des exemples donnés à titre illustratif en référence aux figures annexées qui représentent :
- la figure 1, une vue d'un réceptacle d'un dispositif de fixation selon l'invention,
- les figures 2 à 6, des vues d'insert d'un dispositif de fixation selon l'invention,
- la figure 7, une vue d'une vis d'un dispositif de vissage,
- la figure 8, une vue explicitant le montage du dispositif de fixation,
- la figure 9, une vue présentant une coupe d'un dispositif de fixation,
- la figure 10, une vue présentant un écrou coincé dans le réceptacle coopérant avec une vis traversant un insert,
- la figure 11, une vue d'un véhicule selon l'invention, et
- les figures 12 et 13, des vues explicitant l'intérêt de l'invention.

Les éléments présents dans plusieurs figures distinctes sont affectés d'une seule et même référence.

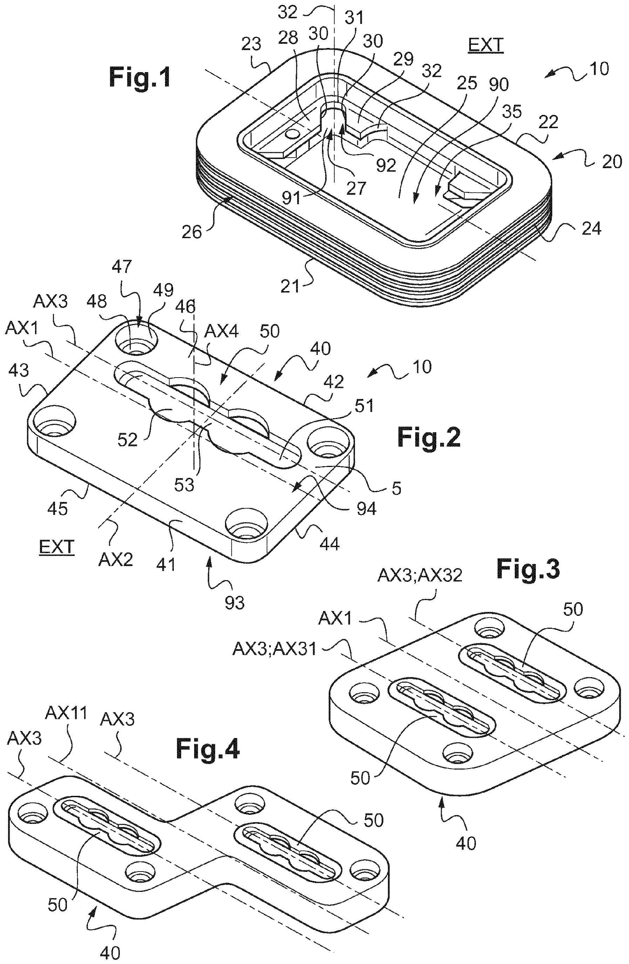

En référence à la figure 1, la présente invention a pour objet un dispositif de fixation 10 visant à permettre la fixation d'une charge 6 à un plancher.

Ce dispositif de fixation 10 est muni d'un réceptacle 20 pouvant être monté à demeure dans le plancher.

Le réceptacle 20 prend la forme d'un conteneur délimitant un volume intérieur dénommé par commodité « volume d'insertion 35 ». Ce conteneur comprend cependant une ouverture en élévation ouverte sur un milieu extérieur EXT destiné à être à l'extérieur du plancher.

Dès lors, le réceptacle comporte au minimum des bords 21, 22, 23, 24 délimitant longitudinalement et transversalement le volume d'insertion 35. Par suite, le réceptacle s'étend transversalement selon sa largeur le long d'un axe transversal d'un premier bord transversal 21 vers un deuxième bord transversal 22 et longitudinalement selon sa longueur le long d'un axe longitudinal d'un premier bord longitudinal 23 vers un deuxième bord longitudinal 24. Dès lors, le premier bord longitudinal 23 s'étend d'une première extrémité du premier bord transversal 21 vers une première extrémité du deuxième bord transversal 22, et le deuxième bord longitudinal 24 s'étend d'une deuxième extrémité du premier bord transversal 21 vers une deuxième extrémité du deuxième bord transversal 22

Par ailleurs, le premier bord transversal 21 peut être parallèle au deuxième bord transversal 22. De même, le premier bord longitudinal 23 peut être parallèle au deuxième bord longitudinal 24. Les bords peuvent former une forme parallélépipédique, éventuellement à coins arrondis.

En outre, chaque bord peut présenter des excroissances 26 formant des entailles sur sa face extérieure à solidariser à un plancher. Ces entailles permettent de favoriser le collage du réceptacle à une âme d'un plancher par exemple.

En outre, le réceptacle peut comprendre une paroi de fond 25 délimitant en élévation vers le bas le fond du volume d'insertion 35. Les bords 21, 22, 23, 24 du réceptacle reposent sur la paroi de fond 25 et sont solidaires de cette paroi de fond 25.

Par contre, le volume d'insertion reste ouvert en élévation vers le haut au niveau de l'ouverture 90.

Par ailleurs, le réceptacle peut comporter des glissières 27 agencées dans la partie basse du volume d'insertion 35.

Ainsi, le réceptacle peut comporter des plaques 28, 29 ménageant ces glissières. Chaque plaque peut alors être parallèle à la paroi de fond 25 et séparée en élévation de cette paroi de fond par un espace creux.

De plus, chaque glissière 27 peut être ouverte vers le haut en élévation. Par suite, chaque glissière est obtenue en utilisant deux plaques 28, 29 séparées l'une de l'autre dans un plan parallèle au fond du volume d'insertion 35. Une glissière a alors une forme de T inversé, la base du T correspondant à l'espace inférieur 91 de la glissière séparant en élévation les plaques 28, 29 du fond, et la jambe du T correspondant à l'espace supérieur 92 de la glissière compris entre deux plaques. Les tranches des deux plaques délimitant l'espace supérieur 92 peuvent être planes et parallèles entre elles.

Par exemple, des glissières 27 sont ménagées dans chaque coin 31 du réceptacle. Au moins une glissière 27 peut d'ailleurs s'étendre selon une bissectrice 32 d'un coin 31 du réceptacle. Une telle glissière 27 représente alors une saignée du réceptacle s'étendant à 45 degrés par rapport à un bord du réceptacle.

En référence à la figure 2, le dispositif de fixation 10 comporte au moins un insert 40 apte à être fixé de manière amovible à un réceptacle d'un plancher, notamment un réceptacle 20 du type décrit précédemment.

Cet insert 40 est ainsi dimensionné pour être disposé dans le volume d'insertion du réceptacle.

L'insert 40 s'étend longitudinalement selon sa longueur le long d'un axe longitudinal AX1 d'un premier flanc longitudinal 43 vers un deuxième flanc longitudinal 44.

L'insert 40 s'étend de plus transversalement selon sa largeur le long d'un axe transversal AX2 d'un premier flanc transversal 41 vers un deuxième flanc transversal 42.

L'axe longitudinal AX1 est un axe médian situé à égale distance du premier flanc transversal 41 et du deuxième flanc transversal 42. En particulier, l'axe longitudinal AX1 peut être un axe de symétrie de l'insert.

L'axe transversal AX2 est un axe médian situé à égale distance du premier flanc longitudinal 43 et du deuxième flanc longitudinal 44. En particulier, l'axe transversal AX2 peut être un axe de symétrie de l'insert.

Le premier flanc longitudinal 43 s'étend d'une première extrémité du premier flanc transversal 41 vers une première extrémité du deuxième flanc transversal 42, et le deuxième flanc longitudinal 44 s'étend d'une deuxième extrémité du premier flanc transversal 41 vers une deuxième extrémité du deuxième flanc transversal 42.

Par ailleurs, le premier flanc transversal 41 peut être parallèle au deuxième flanc transversal 42. De même, le premier flanc longitudinal 43 peut être parallèle au deuxième flanc longitudinal 44. Les flancs peuvent former une forme parallélépipédique, éventuellement à coins arrondis.

Lorsque l'insert 40 est en place dans le réceptacle 20, l'axe longitudinal AX1 et l'axe transversal AX2 de l'insert sont respectivement confondus avec l'axe longitudinal et l'axe transversal du réceptacle.

Par ailleurs, l'insert s'étend en élévation le long d'un axe en élévation AX4 d'une face inférieure 93 destinée à être agencée au fond du volume d'insertion vers une face supérieure 94 destinée à être en regard du milieu extérieur EXT. En particulier, l'axe en élévation AX4 peut être un axe de symétrie de l'insert. La face inférieure peut comprendre une plaque 45.

Eventuellement, l'insert est creux entre la face inférieure 93 et la face extérieure 94.

En outre, l'insert comporte au moins un rail 50 destiné à retenir en élévation un moyen de retenue d'une charge. Chaque rail s'étend longitudinalement le long d'un axe d'extension AX3. L'axe d'extension AX3 d'au moins un rail n'est ni confondu avec l'axe longitudinal AX1 ni confondu avec l'axe transversal AX2

Par exemple, l'axe d'extension est parallèle à l'axe longitudinal AX1, mais décalé transversalement par rapport à cet axe longitudinal AX1. Par suite chaque axe d'extension est agencé transversalement entre l'axe longitudinal AX1 médian de l'insert et un flanc transversal de l'insert.

Chaque rail 50 peut être dans une position de montage de l'insert en regard du milieu extérieur EXT. Lorsque l'insert est agencé dans le réceptacle, au moins un rail est en regard de ce milieu extérieur. Selon l'exemple de la figure 2, chaque rail est au moins partiellement ménagé sur la face supérieure 94.

Un rail peut comprendre un profilé saillant en élévation de la face supérieure 94.

Selon la variante illustrée sur la figure 2, le rail peut être un rail creux comprenant une ouverture 51 ménagée dans la face supérieure 94. Ce rail 50 comporte alors une plaque 46 définissant la face supérieure 94 munie de l'ouverture 51. Cette ouverture s'étend longitudinalement le long de l'axe d'extension AX3 du rail en comprenant une succession d'encoches élargies 52 et d'encoches rétrécies 53 Chaque encoche élargie 52 présente transversalement une largeur supérieure à une largeur d'une encoche rétrécie 53.

Indépendamment de la conception du rail, l'insert peut comporter un unique rail selon la figure 2.

Toutefois et en référence aux figures 3 à 6, l'insert peut posséder de multiples rails.

Par exemple, la figure 3 illustre un insert muni de deux rails qui sont disposés de part et d'autre de l'axe longitudinal AX1. Toutefois, les rails ne sont pas décalés longitudinalement l'un par rapport à l'autre. Chaque rail s'étend selon un axe d'extension Ax31, AX32.

La figure 4 illustre un insert muni de deux rails qui sont disposés de part et d'autre de l'axe longitudinal AX1. Toutefois, les rails sont désormais décalés longitudinalement l'un par rapport à l'autre.

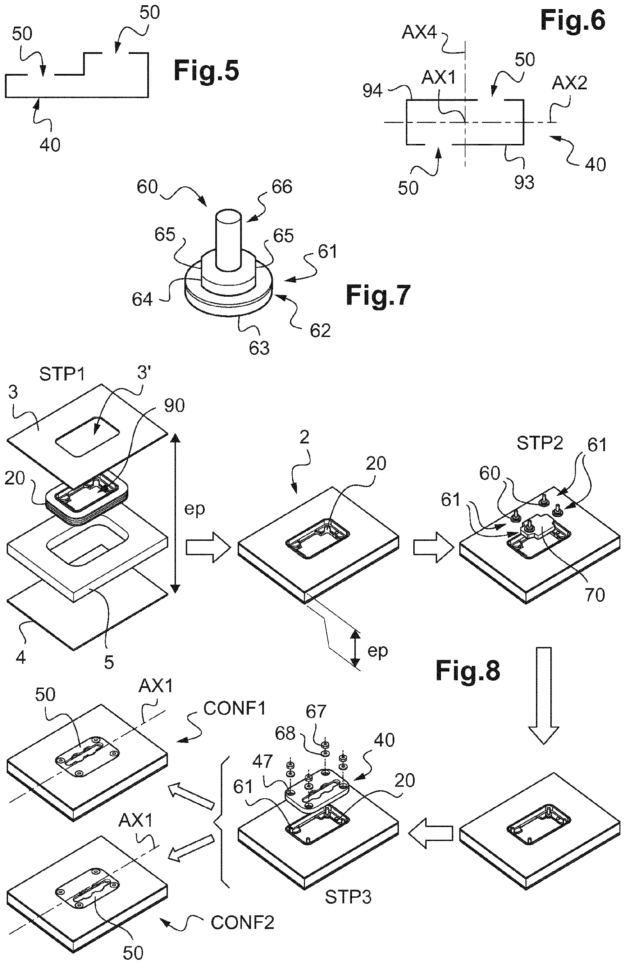

Les figures 5 et 6 illustrent en outre un insert muni de rails décalés en élévation.

Selon la figure 5, la face supérieure 94 peut comporter au moins deux plans décalés en élévation, chaque plan définissant un rail.

Selon la figure 6, la face supérieure 94 et la face inférieure 93 comportent chacune au moins un rail. Une rotation de l'insert autour de l'axe longitudinal AX1, de l'axe transversal AX2 ou de l'axe en élévation AX4 permet de positionner de manière différente un rail au regard de l'extérieur.

Par ailleurs et en référence à la figure 2, l'insert peut comporter au moins un orifice 47 pour coopérer avec un système de vissage apte à solidariser de manière temporaire et réversible l'insert 40 au réceptacle 20.

Chaque orifice 47 s'étend en élévation et traverse de part en part l'épaisseur de l'insert 40 de sa face inférieure 93 à sa face supérieure 94. Chaque orifice 47 peut être un trou lamé qui représente un perçage étagé. L'orifice 47 comprend alors au moins deux perçages 48, 49 concentriques, disposés l'un au dessus de l'autre. Un perçage inférieur 48 débouchant éventuellement sur la face inférieure 93 présente un diamètre inférieur au diamètre d'un perçage supérieur 49 débouchant sur la face supérieure 94. Dès lors, le perçage inférieur 48 et le perçage supérieur 49 peuvent chacun accueillir une tige filetée. De plus, le perçage supérieur 49 peut accueillir un écrou vissé à cette tige filetée ou une tête de la vis solidaire de la tige filetée.

Selon une variante, un orifice peut comporter un lamage débouchant sur la face supérieure et la face inférieure.

Selon l'exemple de la figure 2, l'insert comporte quatre orifices 47 disposés aux quatre coins de cet insert 40.

Dès lors et en référence à la figure 7, le dispositif de vissage comporte au moins deux ensembles de vissage munis chacun d'une vis 61, et par exemple quatre ensembles de vissage disposées aux quatre coins d'un parallélogramme.

Chaque vis comprend une tige filetée 66 portée par une tête 62, destinée à glisser dans une glissière 27 du réceptacle 20 ou à être logée dans un orifice de l'insert. En particulier, la tête 62 illustrée possède au moins un méplat 65 destiné à coopérer par interférence de forme avec le réceptacle 20 pour interdire une rotation de la vis 61 sur elle-même par rapport au réceptacle 20 lors du vissage d'un écrou sur la tige filetée.

Par exemple, la tête présente une base 63 de grandes dimensions surmontée d'une portion intermédiaire 64 plus petite que la base, chaque dimension étant à considérer perpendiculairement à la tige. La tige filetée s'étend en élévation à partir de la portion intermédiaire. Dès lors, chaque méplat 65 est ménagé sur la portion intermédiaire 64.

Les figures 8 à 9 illustrent le montage d'un tel dispositif de fixation.

En référence à la figure 8, durant une première étape STP1, le réceptacle 20 est agencé au sein d'un plancher 2 entre une peau supérieure 3 et une peau inférieure 4 de ce plancher 2. La peau supérieure 3 comporte une lumière 3' en vis-à-vis de l'ouverture 90 du réceptacle 20. Eventuellement, la lumière 3' présente des dimensions inférieures aux dimensions de l'ouverture 90.

Lors de cette opération, le réceptacle peut être solidarisé par des méthodes usuelles à une âme 5 du plancher agencée entre la peau supérieure 3 et la peau inférieure 4, par exemple en employant une méthode de collage.

A l'issue de la première étape STP1, le réceptacle 20 est noyé dans une épaisseur ep du plancher 2 entre la peau inférieure 4 et la peau supérieure 3 de ce plancher 2.

Lors d'une deuxième étape STP2, le système de vissage 60 est mis en place.

Ainsi, chaque vis 61 est positionnée dans le réceptacle 20 en étant glissée dans une glissière 27. En particulier, la base 63 de la tête d'une vis glisse dans l'espace inférieur d'une glissière, et la portion intermédiaire 64 glisse dans l'espace supérieur de cette glissière.

De cette manière, une vis peut être remplacée aisément, à savoir sans modification du plancher.

Pour s'assurer que les vis 61 sont correctement positionnées dans les glissières, le dispositif de fixation peut comporter une mousse 70 agencée contre le fond du réceptacle et contre les vis. La forme de la mousse peut être étudiée pour pousser chaque vis dans la position requise.

A l'issue de la deuxième étape STP2, le réceptacle est alors prêt à accueillir un insert.

Dès lors, durant une troisième étape STP3, un opérateur dispose un insert 40 dans le réceptacle. Chaque orifice 47 de l'insert est ainsi enfilé sur la tige filetée d'une vis 61. Chaque vis 61 s'étend alors en élévation pour traverser un orifice 47 de l'insert 40 et être vissé à un écrou 67. Eventuellement, des rondelles 68 sont aussi utilisées.

### L'opérateur visse alors un tel écrou 67 à la tige filetée

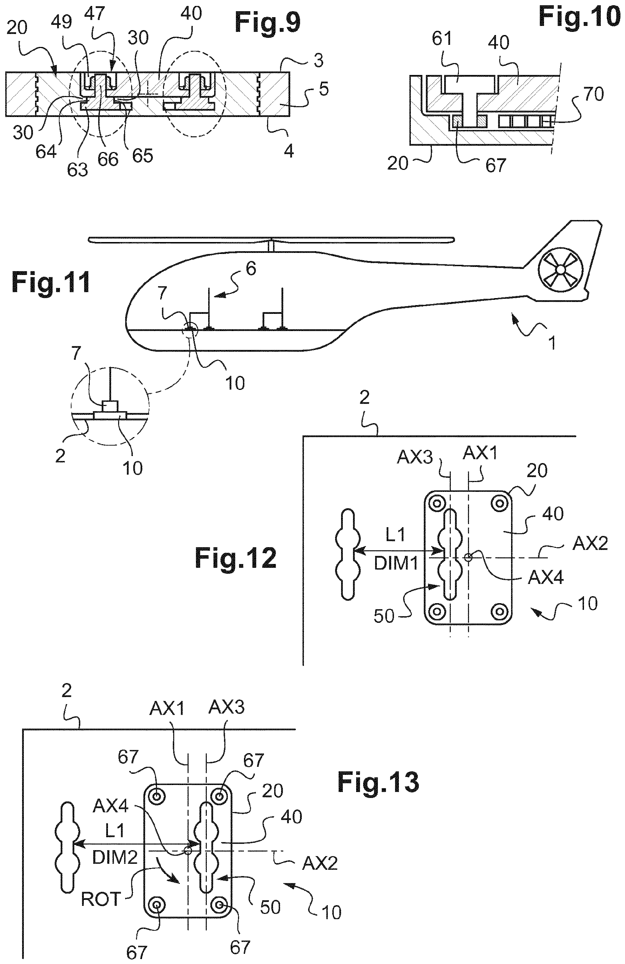

En référence à la figure 9, chaque écrou 67 est favorablement contenu dans un orifice 47 pour ne pas saillir en dehors de l'insert 40, en étant en particulier agencé dans le perçage supérieur 49.

En outre, chaque méplat 65 étant en contact avec une plaque délimitant la glissière, le vissage de l'écrou sur la tige filetée 66 n'induit pas la rotation de cette tige filetée 66.

A l'issue du vissage, l'insert 40 est coincé en élévation entre le réceptacle 20 et chaque écrou 67.

En référence à la figure 8 plusieurs configurations du dispositif de fixation peuvent être obtenues à l'aide d'un insert comprenant un unique rail 50 décalé transversalement par rapport à son axe longitudinal AX1.

La figure 10 illustre une autre variante munie d'écrous logés dans des glissières du réceptacle 20, la tête de chaque vis 61 étant logée dans un orifice de l'insert.

Un dispositif de fixation selon l'invention peut être utilisé sur un véhicule.

La figure 11 présente un véhicule 1 selon l'invention muni d'au moins un dispositif de fixation 10 selon l'invention. En particulier, ce véhicule peut être un aéronef, et notamment un giravion.

Le véhicule comporte un plancher 2 susceptible de porter des charges 6, telles que des sièges par exemple. Chaque charge est alors munie d'au moins un moyen de retenue 7. Ce moyen de retenue 7 peut alors être fixé de manière réversible à un dispositif de fixation 10 noyé dans le plancher 2.

En référence aux figures 12 et 13, un tel dispositif de fixation 10 permet d'agencer diverses charges et par exemple divers types de sièges sans devoir modifier le plancher.

En effet et en référence à la figure 12, le plancher peut comporter un système de fixation gauche coopérant avec un pied gauche d'un siège et un système de fixation droit coopérant avec un pied droit d'un siège. Selon la réalisation de la figure 12, seul le système de fixation droit est un dispositif de fixation 10 selon l'invention. Toutefois, le système de fixation gauche et/ou le système de fixation droit peuvent prendre la forme d'un dispositif de fixation 10 selon l'invention.

En outre, le dispositif de fixation 10 comporte un unique rail 50 désaxé transversalement par rapport à l'axe longitudinal AX1 de l'insert. Néanmoins, cet insert peut éventuellement comporter plusieurs rails, ou encore un rail présentant une angulation non nulle avec cet axe longitudinal.

Sur la figure 12, le rail est situé à gauche de l'axe longitudinal AX1. Dès lors, la distance L1 séparant transversalement le rail 50 du système de fixation droit et le système de fixation gauche est minimisée. Dans cette position, le véhicule peut alors accueillir un siège présentant un empattement réduit DIM1.

En référence à la figure 13, si un siège à empattement important DIM2 doit être agencé sur le plancher, un opérateur peut dévisser les écrous 67 pour sortir l'insert 40 du réceptacle 20. L'opérateur tourne alors l'insert 40 pour lui faire effectuer une rotation ROT de 180 degrés autour de son axe en élévation AX4 avant de le replacer dans le réceptacle 20. Dès lors, le rail 50 se trouve non plus à gauche mais à droite de l'axe longitudinal AX1. Par suite, la distance L1 séparant transversalement le rail 50 du système de fixation droit et le système de fixation gauche est maximisée pour permettre l'agencement du siège à empattement important.

Cette opération s'avère donc simple et ne nécessite pas de modifier le plancher.

En outre, lorsque l'insert possède par exemple deux rails disposés de part et d'autre de l'axe longitudinal, l'étape de rotation de l'insert peut être évitée.

Par ailleurs, le dispositif de fixation peut posséder pour un même réceptacle de multiples inserts différents pour offrir à un opérateur de multiples possibilités. Les inserts ont des dimensions extérieures identiques pour pouvoir par exemple tous être agencés dans le réceptacle. Par contre, deux inserts différents peuvent comprendre des rails de type différents, ou encore des rails localisés transversalement à des distances différentes de l'axe longitudinal de l'insert pour adapter le dispositif de fixation à la charge à fixer au plancher.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Dispositif de fixation (10) pour fixer une charge (6) à un plancher (2), ledit dispositif de fixation (10) comprenant un réceptacle (20) destiné à être solidarisé au plancher (2), ledit réceptacle (20) délimitant un volume d'insertion (35),
le dispositif de fixation (10) comprenant un insert (40) amovible agencé dans ledit volume d'insertion (35), ledit insert (40) s'étendant longitudinalement le long d'un axe longitudinal (AX1) et transversalement le long d'un axe transversal (AX2), ledit insert (40) comprenant au moins un rail (50) destiné à retenir un moyen de retenue (7) de ladite charge, chaque rail (50) pouvant déboucher sur un milieu extérieur (EXT) destiné à être à l'extérieur du plancher (2), au moins un rail (50) s'étendant selon sa longueur le long d'un axe d'extension (AX3) qui n'est ni confondu avec l'axe longitudinal
(AX1) ni confondu avec l'axe transversal,
**caractérisé en ce que** le dispositif de fixation (10) comporte un système de vissage (60) réversible pour visser ledit insert (40) au réceptacle (20), ledit système de vissage comportant au moins deux ensembles de vissage munis chacun d'une vis (61) et d'un écrou (67), l'insert comprenant un orifice (47) par ensemble de vissage, la vis (61) ou l'écrou (67) d'un ensemble de vissage glissant dans une glissière (27) du réceptacle (20) pour être agencé dans le réceptacle (20) ou être retiré hors du réceptacle (20), chaque vis (61) s'étendant en élévation pour traverser un dit orifice (47) de l'insert (40) et être vissée à un écrou (67).

2. Dispositif de fixation selon la revendication 1,
**caractérisé en ce que** ledit axe d'extension (AX3) est parallèle à l'axe longitudinal et décalé transversalement par rapport à cet axe longitudinal.

3. Dispositif de fixation selon l'une quelconque des revendications 1 à 2,
**caractérisé en ce que** ledit insert (40) s'étend transversalement selon sa largeur d'un premier flanc transversal (41) vers un deuxième flanc transversal (42), parallèles entre eux, ledit insert (40) s'étendant longitudinalement selon sa longueur d'un premier flanc longitudinal (43) vers un deuxième flanc longitudinal (44), parallèles entre eux.

4. Dispositif de fixation selon l'une quelconque des revendications 1 à 3,
**caractérisé en ce que** chaque écrou (67) est contenu dans un dit orifice (47) pour ne pas saillir en dehors de l'insert (40), chaque vis (61) comporte au moins un méplat (65) coopérant par interférence de forme avec le réceptacle (20) pour interdire une rotation de la vis (61) sur elle-même par rapport au réceptacle (20) lors du vissage d'un écrou (67) à la vis (61).

5. Dispositif de fixation selon l'une quelconque des revendications 1 à 4,
**caractérisé en ce que** chaque vis est munie d'une tête contenue dans un dit orifice (47) pour ne pas saillir en dehors de l'insert (40), chaque écrou étant glissé dans une glissière et comportant au moins un méplat coopérant par interférence de forme avec le réceptacle pour interdire une rotation de l'écrou sur lui-même par rapport au réceptacle (20) lors du vissage d'une vis à un écrou (67).

6. Dispositif de fixation selon l'une quelconque des revendications 1 à 5,
**caractérisé en ce qu'**au moins une glissière (27) s'étend selon une bissectrice (32) d'un coin (31) du réceptacle (20).

7. Dispositif de fixation selon l'une quelconque des revendications 1 à 6,
**caractérisé en ce que** le dispositif de fixation (10) comporte quatre vis (61) disposées aux quatre coins (31) d'un parallélogramme.

8. Dispositif de fixation selon l'une quelconque des revendications 1 à 7,
**caractérisé en ce que** ledit dispositif de fixation comporte une mousse (70) agencée entre un fond de l'insert (40) et un fond (25) du réceptacle (20).

9. Dispositif de fixation selon l'une quelconque des revendications 1 à 8,
**caractérisé en ce que** ledit insert (40) comporte deux rails (50) décalés en élévation l'un par rapport à l'autre.

10. Dispositif de fixation selon l'une quelconque des revendications 1 à 9,
**caractérisé en ce qu'**au moins un rail (50) comporte une plaque (46) munie d'une ouverture (51) débouchant sur ledit milieu extérieur (EXT), ladite ouverture (51) s'étendant longitudinalement le long de l'axe d'extension (AX3) du rail (50), ladite ouverture (51) comprenant une succession d'encoches élargies (52) et d'encoches rétrécies (53), chaque encoche élargie (52) présentant transversalement une largeur supérieure à une largeur d'une encoche rétrécie (53).

11. Dispositif de fixation selon l'une quelconque des revendications 1 à 8, et 10,
**caractérisé en ce que** ledit insert (40) comporte un unique rail (50).

12. Dispositif de fixation selon l'une quelconque des revendications 1 à 11,
**caractérisé en ce que** ledit axe longitudinal (AX1) est un axe de symétrie dudit insert (40).

13. Véhicule (1) muni d'un plancher (2) comprenant un dispositif de fixation (10) pour fixer une charge (6) à ce plancher (2),
**caractérisé en ce que** ledit dispositif de fixation (10) est selon l'une quelconque des revendications 1 à 12.

14. Véhicule selon la revendication 13,
**caractérisé en ce que** ledit réceptacle (20) est noyé dans une épaisseur (ep) dudit plancher entre une peau inférieure (4) et une peau supérieure (3) de ce plancher (2), ledit insert (40) affleurant ladite peau supérieure (3).

## Patentansprüche

1. Befestigungsvorrichtung (10) zum Befestigen einer Last (6) an einem Boden (2), wobei die Befestigungsvorrichtung (10) eine Aufnahme (20) umfasst, die vorgesehen ist, um am Boden (2) befestigt zu werden, wobei die Aufnahme (20) ein Einführungsvolumen (35) begrenzt,
die Befestigungsvorrichtung (10) einen entfernbaren Einsatz (40) umfasst, der in dem Einführungsvolumen (35) angeordnet ist, wobei sich der Einsatz (40) in Längsrichtung entlang einer Längsachse (AX1) und in Querrichtung entlang einer Querachse (AX2) erstreckt, wobei der Einsatz (40) mindestens eine Schiene (50) zum Halten eines Haltemittels (7) zum Halten der Last umfasst, jede Schiene (50) in der Lage ist, auf eine äußere Umgebung (EXT) zu münden, die vorgesehen ist, um außerhalb des Bodens (2) zu liegen, wobei sich mindestens eine Schiene (50) über ihre Länge entlang einer Verlängerungsachse (AXS) erstreckt, die weder mit der Längsachse (AX1) noch mit der Querachse übereinstimmt,
**dadurch gekennzeichnet, dass** die Befestigungsvorrichtung (10) ein reversibles Schraubsystem (60) zum Verschrauben des Einsatzes (40) an der Aufnahme (20) aufweist, wobei das Schraubsystem mindestens zwei Verschraubungsanordnungen aufweist, die jeweils mit einer Schraube (61) und einer Mutter (67) versehen sind, wobei der Einsatz eine Öffnung (47) pro Verschraubungsanordnung umfasst, die Schraube (61) oder Mutter (67) einer Verschraubungsanordnung in einer Gleitschiene (27) der Aufnahme (20) verschiebbar ist, um in der Aufnahme (20) angeordnet oder aus der Aufnahme (20) entfernt zu werden, wobei sich jede Schraube (61) nach oben erstreckt, um durch eine Öffnung (47) des Einsatzes (40) zu führen und mit einer Mutter (67) verschraubt zu werden.

2. Befestigungsvorrichtung nach Anspruch 1, **dadurch gekennzeichnet, dass** die Verlängerungsachse (AX3) parallel zur Längsachse verläuft und quer zu dieser Längsachse versetzt ist.

3. Befestigungsvorrichtung nach einem der Ansprüche 1 bis 2, **dadurch gekennzeichnet, dass** sich der Einsatz (40) in seiner Breitenrichtung quer von einer ersten Querflanke (41) zu einer zweiten Querflanke (42) erstreckt, die parallel zueinander sind, und sich der Einsatz (40) in seiner Längsrichtung längs von einer ersten Längsflanke (43) zu einer zweiten Längsflanke (44) erstreckt, die parallel zueinander sind.

4. Befestigungsvorrichtung nach einem der Ansprüche 1 bis 3, **dadurch gekennzeichnet, dass** jede Mutter (67), um nicht aus dem Einsatz (40) herauszustehen, in einer Öffnung (47) enthalten ist, wobei jede Schraube (61) mindestens eine Abflachung (65) aufweist, die durch Forminterferenz mit der Aufnahme (20) zusammenwirkt, um eine Drehung der Schraube (61) um sich selbst in Bezug auf die Aufnahme (20) beim Verschrauben einer Mutter (67) mit der Schraube (61) zu verhindern.

5. Befestigungsvorrichtung nach einem der Ansprüche 1 bis 4, **dadurch gekennzeichnet, dass** jede Schraube, um nicht aus dem Einsatz (40) herauszustehen, mit einem Kopf versehen ist, der in einer Öffnung (47) enthalten ist, wobei jede Mutter in einer Gleitschiene gleitet und mindestens eine Abflachung umfasst, die durch Forminterferenz mit der Aufnahme zusammenwirkt, um eine Drehung der Mutter um sich selbst in Bezug auf die Aufnahme (20) beim Verschrauben einer Schraube mit einer Mutter (67) zu verhindern.

6. Befestigungsvorrichtung nach einem der Ansprüche 1 bis 5, **dadurch gekennzeichnet, dass** sich mindestens eine Gleitschiene (27) entlang einer Winkelhalbierenden (32) einer Ecke (31) der Aufnahme (20) erstreckt.

7. Befestigungsvorrichtung nach einem der Ansprüche 1 bis 6, **dadurch gekennzeichnet, dass** die Befestigungsvorrichtung (10) vier Schrauben (61) umfasst, die an den vier Ecken (31) eines Parallelogramms angeordnet sind.

8. Befestigungsvorrichtung nach einem der Ansprüche 1 bis 7, **dadurch gekennzeichnet, dass** die Befestigungsvorrichtung einen Schaum (70) umfasst, der zwischen einem Boden des Einsatzes (40) und einem Boden (25) der Aufnahme (20) angeordnet ist.

9. Befestigungsvorrichtung nach einem der Ansprüche 1 bis 8, **dadurch gekennzeichnet, dass** der Einsatz (40) zwei in der Höhe zueinander versetzte Schienen (50) aufweist.

10. Befestigungsvorrichtung nach einem der Ansprüche 1 bis 9, **dadurch gekennzeichnet, dass** mindestens eine Schiene (50) eine Platte (46) umfasst, die mit einer Öffnung (51) versehen ist, die zu der äußeren Umgebung (EXT) führt, wobei sich die Öffnung (51) in Längsrichtung entlang der Verlängerungsachse (AX3) der Schiene (50) erstreckt, wobei die Öffnung (51) eine Folge von verbreiterten Kerben (52) und verengten Kerben (53) umfasst, wobei jede verbreiterte Kerbe (52) quer eine Breite aufweist, die größer ist als die Breite einer verengten Kerbe (53).

11. Befestigungsvorrichtung nach einem der Ansprüche 1 bis 8 und 10, **dadurch gekennzeichnet, dass** der Einsatz (40) eine einzelne Schiene (50) aufweist.

12. Befestigungsvorrichtung nach einem der Ansprüche 1 bis 11, **dadurch gekennzeichnet, dass** die Längsachse (AX1) eine Symmetrieachse des Einsatzes (40) ist.

13. Fahrzeug (1) mit einem Boden (2), der eine Befestigungsvorrichtung (10) zur Befestigung einer Last (6) an diesem Boden (2) umfasst, **dadurch gekennzeichnet, dass** die Befestigungsvorrichtung (10) nach einem der Ansprüche 1 bis 12 ist.

14. Fahrzeug nach Anspruch 13, **dadurch gekennzeichnet, dass** die Aufnahme (20) in eine Dicke (ep) des Bodens zwischen einer unteren Haut (4) und einer oberen Haut (3) des Bodens (2) eingebettet ist, wobei der Einsatz (40) mit der oberen Haut (3) bündig ist.

## Claims

1. Securing device (10) for securing a load (6) to a floor (2), said securing device (10) comprising a receptacle (20) intended for being rigidly connected to the floor (2), said receptacle (20) defining an insertion space (35), the securing device (10) comprising a removable insert (40) arranged in said insertion space (35), said insert (40) extending longitudinally along a longitudinal axis (AX1) and transversally along a transverse axis (AX2), said insert (40) comprising at least one rail (50) intended for holding a means (7) for holding said load, it being possible for each rail (50) to lead to an external environment (EXT) intended for being outside of the floor (2), at least one rail (50) extending in the length direction thereof along an extension axis (AX3) which does not coincide with the longitudinal axis (AX1) or with the transverse axis, **characterised in that** the securing device (10) comprises a reversible screwing system (60) for screwing said insert (40) to the receptacle (20), said screwing system comprising at least two screwing assemblies each provided with a screw (61) and a nut (67), the insert comprising one hole (47) per screwing assembly, the screw (61) or the nut (67) of a screwing assembly sliding in a slide track (27) of the receptacle (20) so as to be arranged in the receptacle (20) or withdrawn from the receptacle (20), each screw (61) extending upwards so as to pass through one of said holes (47) in the insert (40) and so as to be screwed to a nut (67).

2. Securing device according to claim 1, **characterised in that** said extension axis (AX3) is parallel to the longitudinal axis and transversely offset from said longitudinal axis.

3. Securing device according to either claim 1 or claim 2, **characterised in that** said insert (40) extends transversely in the width direction thereof from a first transverse side (41) to a second transverse side (42), which sides are parallel to one another, said insert (40) extending longitudinally in the length direction thereof from a first longitudinal side (43) to a second longitudinal side (44), which sides are parallel to one another.

4. Securing device according to any of claims 1 to 3, **characterised in that** each nut (67) is contained in one of said holes (47) so as not to protrude out of the insert (40), each screw (61) comprising at least one flat surface (65) which engages with the receptacle (20) in an interference fit so as to prevent the screw (61) from rotating on its axis relative to the receptacle (20) when a nut (67) is screwed to the screw (61).

5. Securing device according to any of claims 1 to 4, **characterised in that** each screw is provided with a head contained in one of said holes (47) so as not to protrude out of the insert (40), each nut being slid in a slide track and comprising at least one flat surface which engages with the receptacle in an interference fit so as to prevent the nut from rotating on its axis relative to the receptacle (20) when a screw is screwed to a nut (67).

6. Securing device according to any of claims 1 to 5, **characterised in that** at least one slide track (27) extends along a bisector (32) of a corner (31) of the receptacle (20).

7. Securing device according to any of claims 1 to 6, **characterised in that** the securing device (10) comprises four screws (61) arranged at the four corners (31) of a parallelogram.

8. Securing device according to any of claims 1 to 7, **characterised in that** said securing device comprises a foamed part (70) arranged between the bottom of the insert (40) and the bottom (25) of the receptacle (20).

9. Securing device according to any of claims 1 to 8, **characterised in that** said insert (40) comprises two rails (50) which are offset from one another in elevation.

10. Securing device according to any of claims 1 to 9, **characterised in that** at least one rail (50) comprises a plate (46) provided with an opening (51) that leads to said external environment (EXT), said opening (51) extending longitudinally along the extension axis (AX3) of the rail (50), said opening (51) comprising a row of widened slots (52) and narrowed slots (53), each widened slot (52) having a width in the transverse direction that is larger than a width of a narrowed slot (53).

11. Securing device according to any of claims 1 to 8 and 10, **characterised in that** said insert (40) comprises a single rail (50).

12. Securing device according to any of claims 1 to 11, **characterised in that** said longitudinal axis (AX1) is an axis of symmetry of said insert (40).

13. Vehicle (1) provided with a floor (2) comprising a securing device (10) for securing a load (6) to said floor (2), **characterised in that** said securing device (10) is a securing device according to any of claims 1 to 12.

14. Vehicle according to claim 13, **characterised in that** said receptacle (20) is embedded between a lower skin (4) and an upper skin (3) of said floor (2) at a thickness (ep) of said floor, said insert (40) being flush with said upper skin (3).
